# EUROPÄISCHE PATENTSCHRIFT

(11) **EP 4 331 797 B1**
(45) Veröffentlichungstag und Bekanntmachung des Hinweises auf die Patenterteilung: **12.11.2025**
(21) Anmeldenummer: 23192101.6
(22) Anmeldetag: 18.08.2023
(51) Int. Cl.: B28B 1/087, B28B 17/00

(54) **RÜTTELEINRICHTUNG EINER BETONSTEINFERTIGUNGSANLAGE UND VERFAHREN ZUR BESTIMMUNG DES VERTIKALEN ABSTANDS ZWISCHEN RÜTTELTISCH UND PRALLLEISTEN SO EINER RÜTTELEINRICHTUNG**
VIBRATING DEVICE OF A CONCRETE BLOCK PRODUCTION PLANT AND METHOD OF DETERMINING THE VERTICAL DISTANCE BETWEEN THE VIBRATING TABLE AND THE IMPACT BARS OF SUCH A VIBRATING DEVICE
DISPOSITIF VIBRANT D'UNE INSTALLATION DE FABRICATION DE BRIQUES EN BÉTON ET PROCÉDÉ DE DÉTERMINATION DE LA DISTANCE VERTICALE ENTRE LA TABLE VIBRANTE ET LES BARRES D'IMPACT D'UN TEL DISPOSITIF VIBRANT

(30) Priorität: 23.08.2022 DE 102022121337
(43) Veröffentlichungstag der Anmeldung: 06.03.2024
(73) Patentinhaber: HESS Group GmbH, 57299 Burbach-Wahlbach (DE)
(72) Erfinder: HAHS, Ralf, 56470 Bad Marienberg (DE); BERGMANN, Sebastian, 57629 Höchstenbach (DE)
(74) Vertreter: Richly & Ritschel Patentanwälte PartG mbB

(56) Entgegenhaltungen:
- EP-A1- 0 343 033
- EP-A1- 4 059 682
- EP-A1- 4 306 284
- DE-A1- 102016 002 525
- DE-A1- 19 511 324
- DE-U1- 29 702 402

## Beschreibung

Die vorliegende Erfindung betrifft eine Rütteleinrichtung von Betonfertigungsanlagen oder Betonfertigungsmaschinen gemäß dem Gegenstand des Anspruchs 1. Rütteleinrichtungen sind aus dem Stand der Technik bekannt und werden zur Verbesserung der Qualität durch Verdichtung von verschiedenen Betonfertigungsprodukten, wie beispielsweise Betonsteinplatten oder Betonsteinblöcken, während des Herstellungsprozesses eingesetzt. Solche Rütteleinrichtungen weisen meist einen dynamisch beweglichen Rütteltisch auf. Als Gegenstück zum Rütteltisch sind Prallleisten auf dem Maschinenrahmen der Rütteleinrichtung starr verbaut. Auf dem Rütteltisch ist eine Fertigungsunterlage, auf welcher sich das zu verdichtende Betonfertigungsprodukt in einer Form befindet, elastisch verspannt. Während des Verdichtungsprozesses bewegt sich der Rütteltisch zusammen mit der Fertigungsunterlage in einer Auf- und Abwärtsbewegung. In seiner Abwärtsbewegung schlägt die Fertigungsunterlage auf den Prallleisten auf. Bei der Aufwärtsbewegung des Rütteltischs schlägt dieser von unten gegen die Fertigungsunterlage. Der Rütteltisch und die Prallleisten sind während des Verdichtungsprozesses mechanischen Verschleißprozessen, insbesondere abrasivem Verschleiß oder Oberflächenzerrüttung, ausgesetzt. Aus diesem Grund sind der Rütteltisch und die Prallleisten oberseitig typischerweise mit auswechselbaren Verschleißleisten ausgestattet. Die Verschleißleisten des Rütteltischs sowie der Prallleisten sind parallel zueinander ausgerichtet. Weisen der Rütteltisch und die Prallleisten Verschleißleisten auf, so sind diese als Teil des Rütteltischs bzw. der Prallleisten anzusehen, sodass die Oberseiten der Verschleißleisten dann als die Oberseiten des Rütteltischs bzw. der Prallleisten zu verstehen sind.

Derartige Rütteleinrichtungen haben den Nachteil, dass die Prallleisten in regelmäßigen Abständen geprüft und nachjustiert werden müssen. Die Prüfung und Nachjustierung dient dazu, den Verschleiß der Prallleisten und des Rütteltischs, insbesondere den Verschleiß derer Verschleißleisten, durch Anpassung in der Höhenlage zu reduzieren. Somit soll eine gleichbleibende Qualität der Betonfertigungsprodukte erzielt werden. Sind die Leisten nicht korrekt justiert, kann dies auch den Verschleiß der Verschleißleisten beschleunigen.

Die Prüfung und Nachjustierung der Leisten dauert bis zu 3 Stunden Arbeitszeit und erfolgt einhergehend mit teilweiser Demontierung von einzelnen Bauteilen der Rütteleinrichtung und/oder der Betonsteinfertigungsanlage. Der Prüfungsprozess ist durch das Arbeiten in der Anlage risikobehaftet und sehr aufwendig gestaltet, da eine vollausgestattete Betonsteinfertigungsanlage dem Maschinenbediener kaum Platz zum Arbeiten bietet. Daher wird während der Prüfung und Nachjustierung der Prallleisten die gesamte Betonsteinfertigungsanlage in den Stillstand versetzt.

Aus dem Stand der Technik sind Verfahren zur Prüfung der Leisten bekannt, bei welchen ein Flachlineal quer über den Rütteltisch gelegt wird und der vertikale Abstand der Oberseiten des Rütteltischs, insbesondere dessen Verschleißleisten, zu den Oberseiten der Prallleisten von Hand mit einem Messschieber ermittelt wird. Entsprechend der ermittelten Abstände werden die Prallleisten nachjustiert.

Weitere Verfahren zur Prüfung der Leisten sind aus dem Stand der Technik bekannt, wobei die Messungen der vertikalen Abstände mittels automatisierten Sensoreinrichtungen erfolgen. Die Sensoreinrichtungen können beispielsweise auf einem akustischen Wirkprinzip beruhen. Die Sensoreinrichtungen werden hierzu weiterhin von Hand auf dem Rütteltisch platziert.

Deshalb ist es die Aufgabe der Erfindung, eine Rütteleinrichtung einer Betonsteinfertigungsanlage mit einer Messeinrichtung bereit zu stellen, wobei die Messeinrichtung es ermöglicht, einen oberseitigen Verschleiß der Leisten festzustellen.

Diese Aufgabe wird erfindungsgemäß durch den Gegenstand der unabhängigen Patentansprüche gelöst. Vorteilhafte Ausführungsformen und Weiterbildungen sind Gegenstand der Unteransprüche.

Das Dokument DE 10 2016 002525 A1 offenbart eine Rütteleinrichtung einer Betonsteinfertigungsanlage gemäß dem Oberbegriff des Anspruchs 1.

Die erfindungsgemäße Rütteleinrichtung einer Betonsteinfertigungsanlage ist mit einer Messeinrichtung vorgesehen. Im Wesentlichen weist die Rütteleinrichtung bezüglich ihrer Längsachsen parallel zueinander und parallel zum Boden angeordnete Prallleisten auf. Der Rütteltisch ist so gestaltet, dass dessen Verschleißleisten bezüglich ihrer Längsachsen parallel zu den Prallleisten bzw. deren Verschleißleisten ausgerichtet und alternierend zwischen den Prallleisten angeordnet sind. Vorzugsweise weist die Messeinrichtung mindestens eine Befestigungseinheit auf. Die Messeinrichtung weist mindestens eine Messeinheit zur Abstandsmessung auf, wobei die Messeinheit oberhalb des Rütteltischs und der Prallleisten angeordnet ist. Die Messeinheit ist mittels einer Führungseinheit der Messeinrichtung orthogonal zu den Prallleisten und parallel zum Boden führbar. Vorzugsweise ist die Messeinheit freitragend oberhalb des Rütteltischs und der Prallleisten führbar und die Messeinheit dabei derart vom Rütteltisch und den Prallleisten beabstandet, dass die Abstände von der Messeinheit bis zu den Oberseiten des Rütteltischs beziehungsweise Prallleisten an bestimmten Messpositionen messbar sind. Erfindungsgemäß ist die Messeinheit während eines Führungsvorganges über die Prallleisten und den Rütteltisch nacheinander an vordefinierte Messpositionen und/oder an während des Führungsvorganges ermittelte Messpositionen anfahrbar. Es ist auch denkbar, dass die Messpositionen von einem Anlagenbediener bestimmbar sind. Mittels der Messeinheit sind die vertikalen Abstände von den Oberseiten der Prallleisten und/oder den Oberseiten des Rütteltischs bis zu Referenzlagen, welche sich aus den Höhenlagen der Messeinheit an den jeweiligen Messpositionen ergeben, bestimmbar.

Der Führungsvorgang der Messeinheit sowie die Abstandsmessung derartiger Messeinrichtungen können automatisiert durchgeführt werden. Die ermittelten Abstände können miteinander verglichen werden, sodass ein Abgleich der Höhenlagen der Leistenoberseiten möglich ist. Auf diese Weise entfällt für den Prüfungsvorgang der Prallleisten das risikobehaftete Arbeiten eines Maschinenbedieners in der Anlage. Damit entfällt auch die Notwendigkeit der Demontierung einzelner Bauteile der Rütteleinrichtung und/oder der Betonsteinfertigungsanlage teilweise oder ganz, sodass der Aufwand und die Dauer der Prüfung auf ein Minimum reduziert werden. Die Betonsteinfertigungsanlage muss zur Prüfung der Leisten nicht vollständig in den Stillstand versetzt werden, sodass eine Prüfung zwischen zwei Verdichtungsprozessen ökonomisch sein kann, wenn beispielsweise eine durch Verschleiß hervorgerufene falsche Ausrichtung der Leistenoberseiten frühzeitig feststellbar ist, und eine Nachjustierung veranlasst werden kann. So kann der Verschleiß der Prallleisten und des Rütteltischs, insbesondere derer Verschleißleisten, deutlich reduziert werden, was wiederum zu einer konstanten Produktqualität führt. Die Prüfung der Leisten derartiger Rütteleinrichtungen erfolgt somit vollautomatisch und fehlerfrei, da menschliche Bedienfehler weitestgehend ausgeschlossen werden können. Insgesamt betrachtet ist eine derartige Messeinrichtung besonders vorteilhaft in Hinblick auf Kostenersparnis, da nicht nur die Betonsteinfertigungsanlage insgesamt weniger verschleißt, sondern auch die Wahrscheinlichkeit zur Produktion von Ausschussware um ein Vielfaches reduziert werden kann.

In einer bevorzugten Ausführungsform weist die Messeinheit ein Befestigungselement zur Befestigung der Messeinheit an einem Führungselement der Führungseinheit auf. Über dieses Befestigungselement ist die Messeinheit an dem Führungselement, insbesondere an einem Befestigungselement des Führungselements befestigt. Weiterhin weist die Messeinheit an der Unterseite eine Sensoreinrichtung zur Abstandsmessung auf, wobei der Abstand von der Referenzlage, welche sich aus der Höhenlage der Messeinheit an den jeweiligen Messpositionen ergibt, bis zu einer unterhalb der Messeinrichtung, vorzugsweise bis zu einer vertikal unterhalb der Messeinrichtung befindlichen Oberfläche eines Objekts bestimmbar ist. Vorzugsweise ist die Oberfläche des Objekts die Oberseite einer Prallleiste oder des Rütteltischs beziehungsweise derer Verschleißleisten. Außerdem ist an einer Seitenwand oder der Oberseite der Messeinheit eine Schnittstelle für eine Energie- und Datenübertragung vorgesehen.

Bei einer derartigen Messeinrichtung kann die Messeinheit über eine Auswerteelektronik verfügen, sodass sowohl Rohdaten als auch verarbeitete Daten über die Schnittstelle übermittelt werden können.

In einer weiteren bevorzugten Ausführungsform ist die Messeinrichtung seitlich neben der Rütteltischeinrichtung am Boden angebracht. Die Messeinheit ist mittels eines Führungselements einer Führungseinheit der Messeinrichtung linear von einer Position, vorzugsweise von einer Parkposition, welche außerhalb der Rütteleinrichtung liegt, zu Messpositionen, welche innerhalb der Rütteleinrichtung und oberhalb des Rütteltischs und der Prallleisten liegen, führbar. Vorzugsweise ist die Führungseinheit weiterhin dazu bestimmt und vorgesehen, die Messeinheit nach dem Messvorgang zu der Ausgangsposition, insbesondere zu der Parkposition außerhalb der Rütteleinrichtung, zurückzuführen. Vorteilhaft ist die Messeinheit während des Führungsvorganges auf einer konstanten Höhenlage horizontal bewegbar, wobei die Messeinheit während des Führungsvorganges vertikal von den Prallleisten und dem Rütteltisch beabstandet ist. Die Abmessungen der Messeinheit und die Abmessungen des Führungselements sowie der Pfad, auf dem die Messeinheit führbar ist, sind so gestaltet, dass die Messeinheit von der außerhalb der Rütteleinrichtung befindlichen Parkposition an die innerhalb der Rütteleinrichtung befindlichen Messpositionen führbar ist, wobei eine Demontierung einzelner Bauteile der Rütteleinrichtung und/oder der Betonsteinfertigungsanlage nicht notwendig ist oder auf ein Minimum reduziert ist.

Vorzugsweise beinhaltet die Führungseinheit im Wesentlichen ein Führungselement, eine Antriebseinheit und ein Getriebe. Dabei ist das Führungselement eine Schubkette, eine Zahnstange oder ein vergleichbares Bauelement, welches zum horizontalen, linearen Führen der Messeinheit verwendbar ist. Das Führungselement ist über das Getriebe mittels der Antriebseinheit in eine horizontale Bewegung versetzbar. Die Antriebseinheit kann dabei ein elektrischer Motor, vorzugsweise ein Servomotor mit Geber zur Lagebestimmung, sein. Das Getriebe kann über eine Kupplungswelle und eine Kupplung mit der Antriebseinheit verbunden sein, um die Drehbewegung der Antriebseinheit in eine Längsbewegung des Führungselements umzusetzen.

Bei Verwendung einer Schubkette als Führungselement kann diese auf einer Trommel auf- und abwickelbar sein, sodass die Schubkette platzsparend verstaut werden kann. Dazu weist die Trommel vorzugsweise eine längliche Form auf, wobei die Längsachse der Trommel orthogonal zum Boden ausgerichtet ist. Die Trommel kann ein Gehäuse aufweisen, welches zum Schutz der Schubkette dienen kann.

Bei einer solchen Messeinrichtung ist die Befestigungseinheit der Messeinrichtung außerhalb der Rütteleinrichtung am Boden verankert, vorzugsweise verdübelt. Die Befestigungseinheit weist mindestens eine Bodenplatte und einen Schwingungsdämpfer auf, welche am Boden verankert werden. Solche Schwingungsdämpfer können beispielsweise in Form von Gummimatten vorliegen, die eine Übertragung von Schwingungen und Vibrationen des Bodens an die Messeinheit reduzieren können. Bei einer solchen Ausführungsform ist die Führungseinheit an der Befestigungseinheit angebracht, sodass auch die Führungseinheit außerhalb der Rütteleinrichtung liegt. Lediglich das Führungselement inklusive der Messeinheit werden während des Führungsvorganges in die Rütteleinrichtung geführt.

Befindet sich die Messeinheit in der Parkposition, so ist die Funktionsweise der Rütteleinrichtung gewährleistet.

Es ist denkbar, dass die Messeinheit in der Parkposition kalibriert werden kann.

Gemäß einer Ausführungsform beruht die Sensoreinrichtung der Messeinheit auf einem optischen, akustischen, induktiven, kapazitiven oder einem anderen, für die Abstandsmessung geeignetem Wirkprinzip.

Die Sensoreinrichtung beinhaltet im Wesentlichen einen Sender, einen Empfänger, eine Elektronik zur Signalverarbeitung und eine Schnittsteller zur Daten- und Energieübertragung. Die Art dieser Bauteile ist abhängig von dem Wirkprinzip der Sensoreinrichtung.

In einer weiteren Ausführungsform weist die Messeinrichtung mindestens zwei entlang der Längsachsen der Prallleisten beabstandete Messeinheiten auf. Jede Messeinheit ist mittels einem separaten Führungselement horizontal führbar.

Durch das Merkmal, dass die Messeinrichtung mindestens zwei entlang der Längsachsen der Prallleisten beabstandete Messeinheiten aufweist, kann erreicht werden, dass eine etwaige Schieflage der Oberseiten der Prallleisten beziehungsweise des Rütteltischs in Richtung der Längsachsen der Prallleisten erfasst wird. Diese Schieflage kann durch verstellte Prallleisten und/oder durch einen ungleichmäßigen Verschleiß der Prallleisten beziehungsweise des Rütteltischs hervorgerufen werden.

Es ist denkbar, dass die Führungselemente und somit die Messeinheiten mittels der Führungseinheit unabhängig voneinander oder simultan in Bewegung versetzt werden können.

In einer weiteren Ausführungsform weist die Messeinheit zwei Sensoreinrichtungen zur Abstandsmessung, wobei die Sensoreinrichtungen in einer Richtung orthogonal zu den Längsachsen der Prallleisten versetzte zueinander sind. Dadurch ist eine etwaige Schieflage der Oberseiten der Leisten in eine Richtung orthogonal der Längsachsen der Prallleisten erfassbar. Diese Schieflage kann durch verstellte Prallleisten und/oder durch einen ungleichmäßigen Verschleiß der Prallleisten beziehungsweise des Rütteltischs hervorgerufen werden

In einer weiteren Ausführungsform weist die Messeinrichtung eine hydraulische, pneumatische oder elektrische Hubeinheit zum Heben und Senken der Messeinheit auf. Die Führungseinheit ist bei dieser Ausführungsform nicht weiter direkt an der Befestigungseinheit angebracht. Vielmehr ist die Führungseinheit an der Hubeinheit angebracht, wobei die Hubeinheit wiederum an der Befestigungseinheit angebracht ist. Mit der Hubeinheit ist eine vertikale Bewegung der Führungseinheit möglich. Über diese vertikale Bewegung der Führungseinheit kann die Messeinheit indirekt mittels der Hubeinheit vertikal bewegt werden.

Vorzugsweise weist die Hubeinheit eine Antriebseinheit, vorzugsweise einen Motor auf. Die Drehbewegung der Antriebseinheit kann über eine Kupplung und eine Hubspindel in eine Auf- und Abwärtsbewegung der Führungseinheit umgesetzt werden. Für eine Führung der Hubbewegung ist eine Hubsäule denkbar.

Es ist weiterhin vorstellbar, dass in einer weiteren Ausführungsform die Messeinheit während der Abstandsmessung auf der Oberseite des Rütteltischs und insbesondere auf den Oberseiten zweier Verschleißleisten des Rütteltischs herabgesetzt ist. Die Referenzlage ergibt sich hierbei aus der Höhenlage der auf den Oberseiten des Rütteltischs aufliegenden Messeinheit. Der vertikale Abstand zwischen der Referenzlage und der Oberseite der sich zwischen dem Rütteltisch bzw. zwischen den beiden Verschleißleisten des Rütteltischs befindlichen Prallleiste ist somit bestimmbar.

Bei einer Ausführungsform ist weiterhin denkbar, dass die Messeinheit im auf dem Rütteltisch aufliegenden Zustand mittels mindestens einem extern ansteuerbaren Befestigungsmittel befestig ist. Das Befestigungsmittel ist insbesondere ein elektrischer Haftmagnet. Die Messeinheit ist dabei an mindestens einer der beiden Verschleißleisten des Rütteltischs, auf dem die Messeinheit aufliegt, befestigt.

Auch ist es denkbar, dass die Messeinheit mittels zwei Befestigungsmittel, insbesondere mittels zwei elektrischen Haftmagneten, an zwei Verschleißleisten des Rütteltischs befestigt ist. Dabei ist jeweils ein Befestigungsmittel für die Befestigung an einer Verschleißleiste vorgesehen und bestimmt.

Die Befestigungsmittel, insbesondere elektrische Haftmagneten, sind während des Messvorganges aktiviert und während des Hub- und Führungsvorganges der Messeinheit deaktiviert. Durch die Befestigung der Messeinheit mittels der Befestigungsmittel an den Rütteltisch ist eine sichere und störungsunempfindliche Bestimmung der Abstände von den Oberseiten der Prallleisten zu den Referenzebenen, welche sich aus den Höhenlagen der auf den Oberseiten dem Rütteltisch aufliegenden Messeinheit ergeben, durchführbar.

Die vorliegende Erfindung bezieht sich auch auf ein Verfahren zur Bestimmung des vertikalen Abstandes zwischen den Oberseiten des Rütteltischs und den Oberseiten der Prallleisten einer Rütteleinrichtung einer Betonsteinfertigungsanlage und zum Abgleichen des Abstandes einer Prallleiste bis zur Referenzlage mit den Abständen der der Prallleiste benachbarten Verschleißleisten des Rütteltischs bis zur Referenzlage mittels einer Messeinrichtung. Die Rütteleinrichtung weist bezüglich ihrer Längsachsen parallel zueinander angeordnete Prallleisten auf. Die Längsachsen der Prallleisten und die Oberseite des Rütteltischs sind bezüglich des Bodens parallel ausgerichtet. Die Messeinrichtung weist mindestens eine Messeinheit zur Bestimmung der vertikalen Abstände von den Oberseiten der Prallleisten und/oder des Rütteltischs bis zu Referenzlagen, welche sich aus den Höhenlagen der Messeinheit an den jeweiligen Messpositionen ergeben. Das Verfahren gemäß der Erfindung umfasst folgende Schritte:
a. Führen der Messeinheit oberhalb des Rütteltischs und der Prallleisten an eine vordefinierte Messposition oder an eine während des Führens ermittelte Messposition.
b. Messen der Abstände von der Referenzlage, welche sich aus der Höhenlage der Messeinheit ergibt, bis zu der Oberseite der Prallleiste beziehungsweise bis zu der Oberseite des Rütteltischs an der Messposition.
c. Abgleichen des Abstandes einer Prallleiste bis zur Referenzlage mit den Abständen der der Prallleiste benachbarten Verschleißleisten des Rütteltischs bis zur Referenzlage.
d. Führen der Messeinheit an eine nachfolgende Messposition und Wiederholen der Schritte b bis c, bis alle Messpositionen angefahren sind.
e. Führen der Messeinheit an eine Parkposition.

In einer weiteren Ausführungsform des Verfahrens ist es denkbar, dass die Messeinheit zur Bestimmung der vertikalen Abstände auf die Oberfläche des Rütteltischs und insbesondere auf die Oberflächen zweier Verschleißleisten des Rütteltischs absenkbar ist, wobei die Referenzlagen die Höhenlagen der auf die Oberflächen des Rütteltischs abgesenkten Messeinheit sind und die vertikalen Abstände zwischen den Oberseiten der sich zwischen dem Rütteltisch und insbesondere zwischen den beiden Verschleißleisten des Rütteltischs befindlichen Prallleisten und den Referenzlagen bestimmbar sind.

In einer weiteren Ausführungsform des Verfahrens ist es denkbar, dass die Schritte a - e in einer anderen Reihenfolge ausgeführt werden.

Weitere Vorteile und Ausführungsformen der Erfindung ergeben sich aus den beigefügten Zeichnungen und der Beschreibung dieser Zeichnungen.

Darin zeigen
- Fig. 1: eine perspektivische Darstellung einer Messeinrichtung gemäß einer Ausführungsform
- Fig. 2: eine perspektivische Darstellung einer an einer Rütteleinrichtung angeordneten Messeinrichtung gemäß einer Ausführungsform
- Fig. 3: eine seitliche Darstellung einer auf dem Rütteltisch abgesetzten Messeinrichtung gemäß einer Ausführungsform

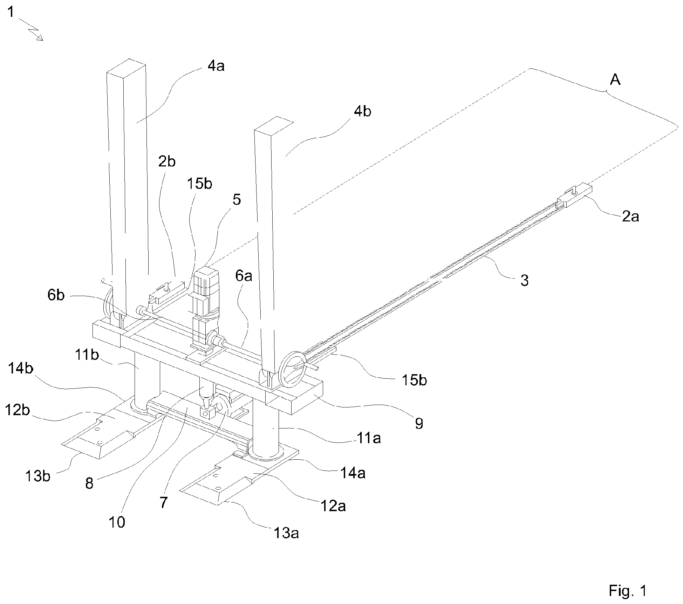

Figur 1 zeigt eine Ausführungsform einer Messeinrichtung (1). In dieser Ausführungsform weist die Messeinrichtung (1) zwei Befestigungseinheiten (12a, 12b), eine Hubeinheit, zwei Messeinheiten (2a, 2b) und eine Führungseinheit zum horizontalen Führen der beiden Messeinheiten (2a, 2b) auf.

Die Befestigungseinheiten (12a, 12b) weisen jeweils eine Bodenplatte (14a, 14b) und einen Schwingungsdämpfer (13a, 13b) auf. Die Befestigungseinheiten (12a, 12b) sind mittels Bodenplatten (14a, 14b) und Schwingungsdämpfer (13a, 13b) so am Boden verankert, vorzugsweise verschraubt, dass eine Übertragung von Schwingungen und Vibrationen des Bodens an die Messeinrichtung reduziert wird. Typischerweise sind die Schwingungsdämpfer (13a, 13b) Gummiplatten, wobei deren Kanten, wie dargestellt, abgeflacht sein können.

Die Hubeinheit weist in dieser Ausführungsform eine Antriebseinheit (7), eine vertikale Hubspindel (8), zwei vertikale Hubsäulen (11a, 11b), einen horizontalen oberen Träger (9) und einen horizontalen unteren Träger (10) auf. Die Hubeinheit ist an den Bodenplatten (14a, 14b) befestigt. Dabei sind die Hubsäulen (11a, 11b) beabstandet und jeweils an einer Befestigungseinheiten (12a, 12b) befestigt. Zwischen den Hubsäulen (11a, 11b) ist der untere Träger (10) an beiden Befestigungseinheiten (12a, 12b) befestigt. Der obere Träger (9) erstreckt sich über die beiden Hubsäulen (11a, 11b) und ist mit diesen verbunden. Der Träger (9) ist in der Höhe verfahrbar. Dazu wird der Träger (9) über die Hubspindel (8) von der Antriebseinheit (7) angetrieben und von den Hubsäulen (11a, 11b) geführt. Die Hubspindel ist zwischen dem oberen Träger (9) und dem unteren Träger (10) angebracht.

Auf der Oberseite des oberen Trägers (9) ist die Führungseinheit befestigt. Die gezeigte Führungseinheit ist für das horizontale Führen von zwei Messeinheiten (2a, 2b) bestimmt, wobei die beiden Messeinheiten (2a, 2b) um einen Abstand (A) beabstandet und parallel zueinander führbar sind. Die Führungseinheit umfasst eine Antriebseinheit (5), zwei Kupplungswellen (6a, 6b), zwei Führungselemente, wobei nur ein Führungselement (3) dargestellt ist, zwei Trommeln (4a, 4b) und zwei Stationen (15a, 15b). Die Führungselemente, Trommeln (4a, 4b) und Stationen (15a, 15b), sind entsprechend des Abstandes (A) voneinander beabstandet. Die Führungselemente sind in dieser Ausführungsform Schubketten, welche orthogonal zu den Trägern (9, 10) und horizontal verfahrbar sind. Das Führungselement (3) ist in einem zumindest teilweise ausgefahrenen Zustand dargestellt. Das andere Führungselement, welches hier nicht dargestellt ist, ist in einem vollständig eingefahrenen Zustand und damit vollständig auf der Trommel (4b) aufgewickelt. Die Trommeln (4a, 4b) weisen in dieser Ausführungsform eine längliche Form auf, wobei die Längsachse orthogonal zum Boden ausgerichtet ist, sodass die Führungselemente platzsparend verstaubar sind. Die Führungselemente sind im aufgewickelten Zustand durch die Trommeln (4a, 4b) vor äußeren Einflüssen geschützt.

Die Messeinheiten (2a, 2b) sind an den Führungselementen befestigt, wobei hier nur das Führungselement (3), an dem die Messeinheit (2a) befestigt ist, abgebildet ist. Das Messelement (2a) ist durch die Führungseinrichtung an eine Messposition geführt. Das Messelement (2b) befindet sich an der Station (15b) in einer Parkposition.

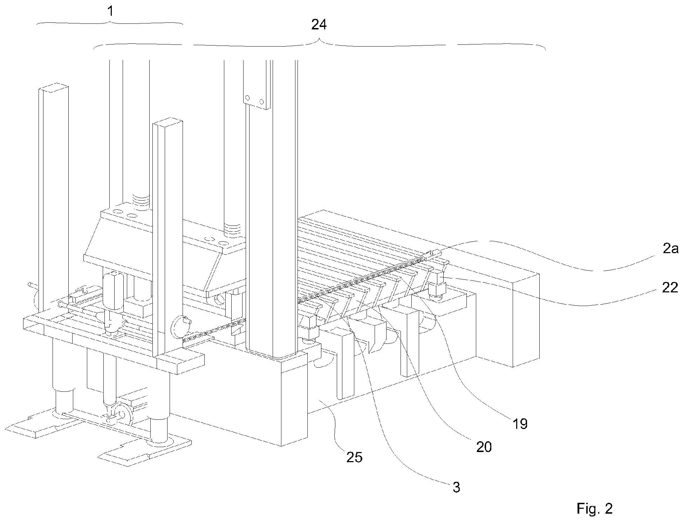

Figur 2 zeigt eine Messeinrichtung (1) gemäß Figur 1 und eine Rütteleinrichtung (24). Die gezeigte Rütteleinrichtung (24) weist einen Rütteltisch (20) mit an ihm verschraubten Verschleißleisten (19) und eine mit einem Maschinenrahmen (25) der Betonfertigungsanlage starr verschraubte Prallleiste (22) auf.

Typischerweise weist eine gattungsgleiche Rütteleinrichtung insgesamt fünf Prallleisten inkl. Verschleißleisten und zehn Verschleißleisten des Rütteltischs auf, wobei die Anzahl der Leisten bei anderen Ausführungsformen von Rütteleinrichtungen variieren kann. Die Verschleißleisten des Rütteltischs und der Prallleisten sind parallel zueinander und horizontal ausgerichtet, wobei jede Prallleiste zwischen zwei Verschleißleisten des Rütteltischs angeordnet sind. In der Figur 2 ist nur eine Prallleiste (22) dargestellt.

Die Messeinrichtung (1) ist so neben der Rütteleinrichtung (24) am Boden befestigt, dass die Messeinheiten (2a, 2b) seitlich in die Rütteleinrichtung (24) und orthogonal zu den Prallleisten (22) mittels der Führungseinheit führbar ist. Dazu sind die Messeinrichtungen (2a, 2b) horizontal und oberhalb der Prallleisten und des Rütteltischs führbar. Die Führungseinrichtung (1) ist so ausgelegt, dass die Messeinheiten mit ihr an alle abzugleichenden Prallleisten anfahrbar sind. Die Messeinrichtung (1) ist so ausgelegt, dass die Messeinheiten an allen Messpositionen durch Hubbewegungen auf die Oberseite des Rütteltischs absetzbar oder wieder abhebbar sind. Befinden sich beide Messeinheiten (2a, 2b) in der Parkposition, ist der Verdichtungsprozess durchführbar.

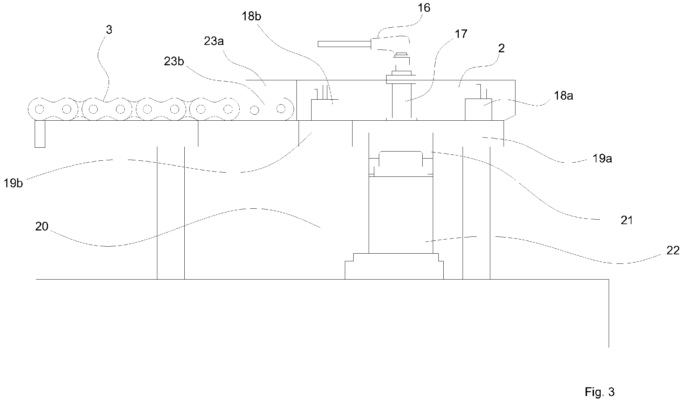

Figur 3 zeigt in einer seitlichen Ansicht eine Ausführungsform, bei welcher eine Messeinheit (2) an den Oberseiten der Verschleißleisten (19a, 19b) des Rütteltischs befestigt ist. Zwischen den beiden Verschleißleisten (19a, 19b) ist eine Prallleiste (22) angeordnet, welche oberseitig über eine Verschleißleiste (21) verfügt. Die Messeinheit (2) ist mittels der Führungseinheit, wobei hier nur das Führungselement (3) dargestellt ist, an die Messposition geführt und durch eine mittels der hier nicht abgebildeten Hubeinheit realisierten Hubbewegung auf die Oberseiten der Verschleißleisten (19a, 19b) herabgesetzt.

In dieser Positionierung der Messeinheit (2) befindet sich eine an der Unterseite der Messeinheit (2) befindliche Sensoreinrichtung (17) senkrecht oberhalb der Oberseite der Verschleißleiste (21) der Prallleiste (22). Die Sensoreinrichtung (17) ist so ausgerichtet, dass, ein Abstand von einer Referenzebene, welche sich aus der Höhenlage der Messeinrichtung (2) ergibt, zu einem unterhalb der Messeinrichtung (2) befindlichem Objekt bestimmbar ist. In diesem Fall ist das Objekt die Verschleißleiste (21) der Prallleiste (22) und die Höhenlage der Messeinrichtung (2) ergibt sich daraus, dass die Messeinrichtung (2) auf den beiden Oberseiten der Verschleißleisten (19a, 19b) aufliegt. Somit ist in dieser Ausführungsform der vertikale Abstand von der Oberseite Verschleißleiste (21) der Prallleiste (22) bis zu den Oberseiten der Verschleißleisten (19a, 19b) bestimmbar.

Die Messeinheit (2) weist eine Schnittstelle (16) zur Übertragung der mittels der Sensoreinrichtung bestimmten Daten auf.

Die dargestellte Messeinheit (2) weist weiterhin ein Befestigungselement (23a) auf, mittels welchem die Messeinheit (2) an dem Befestigungselement (23b) des Führungselements (3) befestigt ist.

Die dargestellte Messeinheit (2) weist zwei Befestigungsmittel (18a, 18b) auf, mittels welcher die Messeinheit (2) an den Oberseiten der Verschleißleisten (19a, 19b) befestig ist. Die Befestigungselemente (18a, 18b) sind typischerweise elektrische Haftmagnete.

### Bezugszeichenliste

- 1: Messeinrichtung
- 2a: Messeinheit an einer Messposition
- 2b: Messeinheit an einer Parkposition
- 3: Führungselement
- 4a/b: Trommel
- 5: Antriebseinheit der Führungseinheit
- 6a/b: Kupplungswelle
- 7: Antriebseinheit der Hubeinheit
- 8: Hubspindel
- 9: Oberer Träger
- 10: Unterer Träger
- 11a/b: Hubsäule
- 12a/b: Befestigungseinheit
- 13a/b: Schwingungsdämpfer
- 14a/b: Bodenplatte
- 15a/b: Station
- 16: Schnittstelle
- 17: Sensoreinrichtung
- 18a/b: Befestigungsmittel
- 19, 19a/b: Verschleißleisten des Rütteltischs
- 20: Rütteltisch
- 21: Verschleißleiste einer Prallleiste
- 22: Prallleiste
- 23a: Befestigungselement der Messeinheit
- 23b: Befestigungselement des Führungselements
- 24: Rütteleinrichtung
- 25: Maschinenrahmen

## Patentansprüche

1. Rütteleinrichtung (24) einer Betonsteinfertigungsanlage,
wobei die Rütteleinrichtung (24)
- einen Rütteltisch (20),
- alternierend und bezüglich ihrer Längsachsen parallel zueinander und parallel zum Boden angeordnete Prallleisten (22), und
- eine Messeinrichtung (1) für die Rütteleinrichtung (24) der Betonsteinfertigungsanlage aufweist,
wobei die Messeinrichtung (1) mindestens eine Messeinheit (2a,2b) zur Abstandsmessung aufweist,
**dadurch gekennzeichnet, dass**
die Messeinheit (2a,2b) oberhalb des Rütteltischs (20) und der Prallleisten (22) angeordnet ist und die Messeinheit (2a,2b) mittels einer Führungseinheit (3) der Messeinrichtung (1) orthogonal zu den Prallleisten (22) und parallel zum Boden führbar ist,
und dass die Messeinheit (2a,2b) während eines Führungsvorganges über die Prallleisten (22) und den Rütteltisch (20) nacheinander an vordefinierte Messpositionen und/oder an während des Führungsvorganges ermittelte Messpositionen anfahrbar ist und mittels der Messeinheit (2a,2b) die vertikalen Abstände von den Oberseiten der Prallleisten (22) und/oder der Oberseite des Rütteltischs (20) an der Messposition bis zu Referenzlagen, welche sich aus den Höhenlagen der Messeinheit (2a,2b) an den jeweiligen Messpositionen ergeben, bestimmbar sind.

2. Rütteleinrichtung (24) nach dem vorherigen Anspruch,
**dadurch gekennzeichnet, dass**
die Messeinheit (2a,2b)
a) ein Befestigungselement zur Befestigung der Messeinheit (2a,2b) an einem Führungselement der Führungseinheit (3) aufweist,
b) an der Unterseite eine Sensoreinrichtung (17) zur Abstandsmessung aufweist, wobei der Abstand von einer Referenzlage, welche sich aus der Höhenlage der Messeinheit (2a,2b) an den jeweiligen Messpositionen ergibt, bis zu einer unterhalb der Messeinrichtung befindlichen Oberfläche eines Objekts bestimmbar ist,
c) an einer Seitenwand oder der Oberseite eine Schnittstelle für eine Energie- und Datenübertragung aufweist.

3. Rütteleinrichtung (24) nach einem der vorherigen Ansprüche, **dadurch gekennzeichnet, dass** die Messeinrichtung (1) seitlich neben der Rütteleinrichtung (24) am Boden angebracht ist und die Messeinheit (2a,2b) mittels eines Führungselements einer Führungseinheit (3) der Messeinrichtung (1) linear von einer außerhalb der Rütteleinrichtung (24) befindlichen Parkposition zu innerhalb der Rütteleinrichtung (24) und oberhalb des Rütteltischs (20) und der Prallleisten (22) befindlichen Messpositionen führbar ist.

4. Rütteleinrichtung (24) nach dem vorherigen Anspruch, **dadurch gekennzeichnet, dass** die Sensoreinrichtung (17) der Messeinheit (2a,2b) auf einem optischen, akustischen, induktiven, kapazitiven oder einem anderen, für die Abstandsmessung geeignetem Wirkprinzip, beruht.

5. Rütteleinrichtung (24) nach einem der vorherigen Ansprüche, **dadurch gekennzeichnet, dass** die Messeinrichtung (1) mindestens zwei entlang der Längsachsen der Prallleisten (22) beabstandete Messeinheiten (2a,2b) aufweist, wobei jede Messeinheit (2a,2b) mittels einem separaten Führungselement horizontal führbar ist.

6. Rütteleinrichtung (24) nach einem der vorherigen Ansprüche, **dadurch gekennzeichnet, dass** die Messeinheit (2a,2b) zwei Sensoreinrichtungen (17) zur Abstandsmessung aufweist, wobei die Sensoreinrichtungen (17) in einer Richtung orthogonal zu den Längsachsen der Prallleisten (22) versetzt zueinander sind.

7. Rütteleinrichtung (24) nach einem der vorherigen Ansprüche, **dadurch gekennzeichnet, dass** die Messeinrichtung (1) eine hydraulische, pneumatische oder elektrische Hubeinheit zum Heben und Senken der Messeinheit (2a,2b) aufweist.

8. Rütteleinrichtung (24) nach dem vorherigen Anspruch, **dadurch gekennzeichnet, dass** die Rütteleinrichtung (24) mindestens ein extern ansteuerbares Befestigungsmittel umfasst, wobei die Messeinheit (2a,2b) so konfiguriert ist, dass sie während der
Abstandsmessung auf der Oberseite des Rütteltischs (20) und insbesondere auf den Oberseiten zweier Verschleißleisten (19, 19a/b) des Rütteltischs (20) herabgesetzt
ist, wobei sich die Referenzlage aus der Höhenlage der auf der Oberseite des Rütteltischs (20) beziehungsweise auf den Oberseiten der beiden Verschleißleisten (19, 19a/b) aufliegenden Messeinheit (2a,2b) ergibt, und der vertikale Abstand zwischen der Referenzlage und der Oberseite der sich zwischen den zwei Rütteltischleisten befindlichen Prallleiste bestimmbar ist, und
die Messeinheit (2a,2b) im auf den Rütteltischleisten aufliegenden Zustand mittels des mindestens einem extern ansteuerbaren Befestigungsmittel, insbesondere einem elektrischen Haftmagneten, an mindestens einer der beiden Verschleißleisten des Rütteltischs (20) befestigt ist.

9. Verfahren zur Bestimmung des vertikalen Abstandes zwischen Rütteltisch (20) und Prallleisten (22) einer Rütteleinrichtung (24) einer Betonsteinfertigungsanlage nach einem der vorherigen Ansprüche und zum Abgleichen des Abstandes einer Prallleiste bis zur Referenzlage mit den Abständen der der Prallleiste benachbarten Verschleißleisten des Rütteltischs (20) bis zur Referenzlage mittels einer Messeinrichtung (1), umfassend die Schritte:
a. Führen der Messeinheit (2a,2b) oberhalb des Rütteltischs (20) und der Prallleisten (22) an eine vordefinierte Messposition oder an eine während des Führens ermittelte Messposition.
b. Messen der Abstände von der Referenzlage, welche sich aus der Höhenlage der Messeinheit (2a,2b) ergibt, bis zu der Oberseite der Prallleiste beziehungsweise bis zu der Oberseite des Rütteltischs (20) an der Messposition.
c. Abgleichen des Abstandes einer Prallleiste bis zur Referenzlage mit den Abständen der der Prallleiste benachbarten Verschleißleisten des Rütteltischs (20) bis zur Referenzlage.
d. Führen der Messeinheit (2a,2b) an eine nachfolgende Messposition und Wiederholen der Schritte b bis c, bis alle Messpositionen angefahren sind.
e. Führen der Messeinheit (2a,2b) an eine Parkposition.

10. Verfahren nach Anspruch 9, **dadurch gekennzeichnet, dass** die Messeinheit (2a,2b) zur Bestimmung der Höhenlagen auf die Oberflächen zweier Verschleißleisten (19, 19a/b) des Rütteltischs (20) absenkbar ist, wobei die Referenzlagen die Höhenlagen der auf die Oberflächen der Verschleißleisten (19, 19a/b) des Rütteltischs (20) abgesenkten Messeinheit (2a,2b) sind und die vertikalen Abstände zwischen den Oberseiten der sich zwischen zwei Verschleißleisten des Rütteltischs (20) befindlichen Prallleisten (22) und den Referenzlagen bestimmbar sind.

## Claims

1. Vibrating device (24) for a concrete block production plant,
the vibrating device (24) comprising
- a vibrating table (20),
- impact bars (22) arranged alternately and in parallel with each other and in parallel with the ground with respect to their longitudinal axes, and
- a measuring device (1) for the vibrating device (24) of the concrete block production plant,
the measuring device (1) comprising at least one measuring unit (2a, 2b) for distance measurement,
**characterized in that**
the measuring unit (2a, 2b) is arranged above the vibrating table (20) and the impact bars (22) and the measuring unit (2a, 2b) can be guided orthogonally to the impact bars (22) and in parallel with the ground by means of a guide unit (3) of the measuring device (1),
**and in that,** during a guiding process, the measuring unit (2a, 2b) can be approached by the impact bars (22) and the vibrating table (20) successively at predefined measuring positions and/or at measuring positions determined during the guiding process, and the vertical distances from the upper sides of the impact bars (22) and/or the upper side of the vibrating table (20) at the measuring position to reference positions, which result from the heights of the measuring unit (2a, 2b) at the relevant measuring positions, can be determined by means of the measuring unit (2a, 2b).

2. Vibrating device (24) according to the preceding claim,
**characterized in that**
the measuring unit (2a,2b) comprises
a) a fastening element for fastening the measuring unit (2a, 2b) to a guide element of the guide unit (3),
b) a sensor device (17) on the underside for distance measurement, it being possible to determine the distance from a reference position, which results from the height of the measuring unit (2a, 2b) at the relevant measuring positions, to a surface of an object located below the measuring device,
c) an interface for power and data transmission on a side wall or the upper side.

3. Vibrating device (24) according to any of the preceding claims,
**characterized in that** the measuring device (1) is mounted laterally next to the vibrating device (24) on the floor and the measuring unit (2a, 2b) can be guided linearly by means of a guide element of a guide unit (3) of the measuring device (1) from a parking position located outside the vibrating device (24) to measuring positions located inside the vibrating device (24) and above the vibrating table (20) and the impact bars (22).

4. Vibrating device (24) according to the preceding claim,
**characterized in that** the sensor device (17) of the measuring unit (2a, 2b) is based on an optical, acoustic, inductive, capacitive, or other operating principle suitable for distance measurement.

5. Vibrating device (24) according to any of the preceding claims,
**characterized in that** the measuring device (1) has at least two measuring units (2a, 2b) spaced apart along the longitudinal axes of the impact bars (22), it being possible to guide each measuring unit (2a, 2b) horizontally by means of a separate guide element.

6. Vibrating device (24) according to any of the preceding claims,
**characterized in that** the measuring unit (2a, 2b) comprises two sensor devices (17) for distance measurement, the sensor devices (17) being offset from one another in a direction orthogonal to the longitudinal axes of the impact bars (22).

7. Vibrating device (24) according to any of the preceding claims,
**characterized in that** the measuring device (1) has a hydraulic, pneumatic, or electric lifting unit for raising and lowering the measuring unit (2a, 2b).

8. Vibrating device (24) according to the preceding claim, **characterized in that** the vibrating device (24) comprises at least one externally controllable fastening means, the measuring unit (2a, 2b) being configured such that it is lowered during the distance measurement on the upper side of the vibrating table (20) and in particular on the upper sides of two wear strips (19, 19a/b) of the vibrating table (20), the reference position resulting from the height of the measuring unit (2a, 2b) resting on the upper side of the vibrating table (20) or on the upper sides of the two wear strips (19, 19a/b), and it being possible to determine the vertical distance between the reference position and the upper side of the impact bar located between the two vibrating table bars,
and, in the state in which it is resting on the vibrating table bars, the measuring unit (2a, 2b) being fastened to at least one of the two wear strips of the vibrating table (20) by means of the at least one externally controllable fastening means, in particular an electric clamping magnet.

9. Method for determining the vertical distance between the vibrating table (20) and impact bars (22) of a vibrating device (24) of a concrete block production plant according to any of the preceding claims and for aligning the distance from an impact bar to the reference position with the distances from the wear strips of the vibrating table (20) adjacent to the impact bar to the reference position by means of a measuring device (1),
comprising the steps of:
a. guiding the measuring unit (2a, 2b) above the vibrating table (20) and the impact bars (22) to a predefined measuring position or to a measuring position determined during the guiding,
b. measuring the distances from the reference position, which results from the height of the measuring unit (2a, 2b), to the upper face of the impact bar or to the upper face of the vibrating table (20) at the measuring position,
c. aligning the distance from an impact bar to the reference position with the distances from the wear bars of the vibrating table (20) adjacent to the impact bar to the reference position,
d. guiding the measuring unit (2a,2b) to a subsequent measuring position and repeating steps b to c until all measuring positions have been approached,
e. guiding the measuring unit (2a,2b) to a parking position.

10. Method according to claim 9, **characterized in that**
the measuring unit (2a, 2b) can be lowered onto the surfaces of two wear strips (19, 19a/b) of the vibrating table (20) to determine the height positions, the reference positions being the height positions of the measuring unit (2a, 2b) lowered onto the surfaces of the wear strips (19, 19a/b) of the vibrating table (20), and it being possible to determine the vertical distances between the upper sides of the impact bars (22) located between two wear strips of the vibrating table (20) and the reference positions.

## Revendications

1. Dispositif vibrant (24) d'une installation de fabrication de blocs en béton, dans lequel le dispositif vibrant (24) présente
- une table vibrante (20),
- des barres d'impact (22) disposées en alternance et parallèlement les unes aux autres par rapport à leurs axes longitudinaux et parallèlement au sol, et
- un dispositif de mesure (1) pour le dispositif vibrant (24) de l'installation de fabrication de blocs en béton,
dans lequel le dispositif de mesure (1) présente au moins une unité de mesure (2a, 2b) pour la mesure de la distance,
**caractérisé en ce que**
l'unité de mesure (2a, 2b) est disposée au-dessus de la table vibrante (20) et des barres d'impact (22) et l'unité de mesure (2a, 2b) peut être guidée au moyen d'une unité de guidage (3) du dispositif de mesure (1) orthogonalement aux barres d'impact (22) et parallèlement au sol,
et **en ce que**, pendant un processus de guidage, l'unité de mesure (2a, 2b) peut être amenée au-dessus des barres d'impact (22) et de la table vibrante (20) successivement à des positions de mesure prédéfinies et/ou à des positions de mesure déterminées pendant le processus de guidage et, au moyen de l'unité de mesure (2a, 2b), les distances verticales entre les faces supérieures des barres d'impact (22) et/ou la face supérieure de la table vibrante (20) à la position de mesure jusqu'à des positions de référence, lesquelles résultent des positions en hauteur de l'unité de mesure (2a, 2b) aux positions de mesure respectives, peuvent être déterminées.

2. Dispositif vibrant (24) selon la revendication précédente,
**caractérisé en ce que**
l'unité de mesure (2a,2b)
a) présente un élément de fixation pour la fixation de l'unité de mesure (2a, 2b) à un élément de guidage de l'unité de guidage (3),
b) présente sur la face inférieure un dispositif formant capteur (17) pour la mesure de la distance, dans lequel la distance peut être déterminée depuis une position de référence, laquelle résulte de la position en hauteur de l'unité de mesure (2a, 2b) aux positions de mesure respectives, jusqu'à une surface d'un objet se trouvant en dessous du dispositif de mesure,
c) présente, sur une paroi latérale ou sur la face supérieure, une interface pour une transmission d'énergie et de données.

3. Dispositif vibrant (24) selon l'une des revendications précédentes,
**caractérisé en ce que** le dispositif de mesure (1) est monté sur le sol latéralement à côté du dispositif vibrant (24) et l'unité de mesure (2a, 2b) peut être guidée linéairement au moyen d'un élément de guidage d'une unité de guidage (3) du dispositif de mesure (1) depuis une position de stationnement se trouvant à l'extérieur du dispositif vibrant (24) jusqu'à des positions de mesure se trouvant à l'intérieur du dispositif vibrant (24) et au-dessus de la table vibrante (20) et des barres d'impact (22).

4. Dispositif vibrant (24) selon la revendication précédente,
**caractérisé en ce que** le dispositif formant capteur (17) de l'unité de mesure (2a, 2b) repose sur un principe de fonctionnement optique, acoustique, inductif, capacitif ou autre, approprié pour la mesure de la distance.

5. Dispositif vibrant (24) selon l'une des revendications précédentes, **caractérisé en ce que** le dispositif de mesure (1) présente au moins deux unités de mesure (2a, 2b) espacées le long des axes longitudinaux des barres d'impact (22), dans lequel chaque unité de mesure (2a, 2b) peut être guidée horizontalement au moyen d'un élément de guidage séparé.

6. Dispositif vibrant (24) selon l'une des revendications précédentes, **caractérisé en ce que** l'unité de mesure (2a, 2b) présente deux dispositifs formant capteurs (17) pour la mesure de la distance, dans lequel les dispositifs formant capteurs (17) sont décalés l'un par rapport à l'autre dans une direction orthogonale aux axes longitudinaux des barres d'impact (22).

7. Dispositif vibrant (24) selon l'une des revendications précédentes, **caractérisé en ce que** le dispositif de mesure (1) présente une unité de levage hydraulique, pneumatique ou électrique permettant de soulever et d'abaisser l'unité de mesure (2a, 2b).

8. Dispositif vibrant (24) selon la revendication précédente, **caractérisé en ce que** le dispositif vibrant (24) comprend au moins un moyen de fixation pouvant être commandé depuis l'extérieur, dans lequel l'unité de mesure (2a, 2b) est configurée de sorte que, pendant la mesure de la distance, ladite unité de mesure est abaissée sur la face supérieure de la table vibrante (20) et en particulier sur les faces supérieures de deux barres d'usure (19, 19a/b) de la table vibrante (20), dans lequel la position de référence résulte de la position en hauteur de l'unité de mesure (2a, 2b) reposant sur la face supérieure de la table vibrante (20) ou sur les faces supérieures des deux barres d'usure (19, 19a/b), et la distance verticale entre la position de référence et la face supérieure de la barre d'impact se trouvant entre les deux barres de table vibrante peut être déterminée,
et l'unité de mesure (2a, 2b), à l'état posé sur les barres de table vibrante, est fixée à au moins l'une des deux barres d'usure de la table vibrante (20) au moyen de l'au moins un moyen de fixation pouvant être commandé depuis l'extérieur, en particulier d'un aimant adhésif électrique.

9. Procédé permettant de déterminer la distance verticale entre une table vibrante (20) et des barres d'impact (22) d'un dispositif vibrant (24) d'une installation de fabrication de blocs en béton selon l'une des revendications précédentes et permettant de comparer la distance d'une barre d'impact jusqu'à la position de référence avec les distances des barres d'usure de la table vibrante (20) voisines de la barre d'impact jusqu'à la position de référence au moyen d'un dispositif de mesure (1),
comprenant les étapes consistant à :
a. guider l'unité de mesure (2a, 2b) au-dessus de la table vibrante (20) et des barres d'impact (22) vers une position de mesure prédéfinie ou vers une position de mesure déterminée pendant le guidage.
b. mesurer les distances entre la position de référence, laquelle résulte de la position en hauteur de l'unité de mesure (2a, 2b), et la face supérieure de la barre d'impact ou la face supérieure de la table vibrante (20) à la position de mesure.
c. ajuster la distance d'une barre d'impact jusqu'à la position de référence avec les distances des barres d'usure de la table vibrante (20) voisines de la barre d'impact jusqu'à la position de référence.
d. guider l'unité de mesure (2a, 2b) vers une position de mesure suivante et répéter les étapes b à c jusqu'à ce que toutes les positions de mesure soient atteintes.
e. guider l'unité de mesure (2a, 2b) vers une position de stationnement.

10. Procédé selon la revendication 9, **caractérisé en ce que**
l'unité de mesure (2a, 2b) peut être abaissée sur les surfaces de deux barres d'usure (19, 19a/b) de la table vibrante (20) pour la détermination des positions en hauteur, dans lequel les positions de référence sont les positions en hauteur de l'unité de mesure (2a, 2b) abaissée sur les surfaces des barres d'usure (19, 19a/b) de la table vibrante (20) et les distances verticales entre les faces supérieures des barres d'impact (22) se trouvant entre deux barres d'usure de la table vibrante (20) et les positions de référence peuvent être déterminées.
